# EUROPEAN PATENT SPECIFICATION

(11) **EP 1 753 107 B1**
(45) Date of publication and mention of the grant of the patent: **14.07.2010**
(21) Application number: 06076453.7
(22) Date of filing: 21.07.2006
(51) Int. Cl.: H02G 3/30

(54) **Clamping piece**
Klemmteil
Pièce de serrage

(30) Priority: 09.08.2005 NL 1029694
(43) Date of publication of application: 14.02.2007
(73) Proprietor: ABB B.V., 3068 AV Rotterdam (NL)
(72) Inventor: Renckens, Thomas Phillipus, 3742 ND Baarn (NL)
(74) Representative: Ferguson, Alexander

(56) References cited:
- NL-A- 9 101 191
- NL-C2- 1 015 733

## Description

### BACKGROUND OF THE INVENTION

The invention relates to a clamping piece for clamping an installation pipe in a slit in a wall.

From Dutch patent specification 188.376 such a clamping piece is known, which consists of a synthetic wedge body having a substantially V-shaped cross-section and at least at one side surface, both at the broad (upper) end and at the narrow (lower) end, a sharp edge, wherein the wedge body is made of synthetic material.

It is general common practice, in case there is no question of poured concrete construction, not to lay the electric wires in buildings until the rough construction is ready. When lines have to be arranged flush in the walls of the construction, slits for accommodating the wire pipes are chiselled or slotted out of the wall, wherein said slits after arranging said pipes are stopped up with cement or plaster. In order to prevent the pipe from coming out of the slit before the slit has been stopped up, a temporary locking in the shape of a wedge body is used, that is hammered into the slit resulting in the pipe being clamped, and remaining in its place with respect to the front side of the slit during finishing.

The known clamping piece and particularly the improved clamping piece described in Dutch patent 1015733 usually are reasonably satisfactory in practice.

However, if the slits have not been slotted out but are sawn, the thus created slits do not allow the known clamping pieces to be sufficiently effective and often they are unable to perform a clamping function at all. The sawn slits moreover differ in width. Working with adapter rings on the pipes to provide them locally with a larger diameter, thus enabling the clamping pieces to function indeed, is laborious.

It is an object of the invention to provide a clamping piece that might solve this problem.

### SUMMARY OF THE INVENTION

From one aspect the invention provides a clamping piece for securing an installation pipe in a slit in a wall wherein the clamping piece is provided with two opposite clamping sides for engaging the installation pipe and a side wall surface of the slit, respectively, in order to clamp the pipe against an opposite side wall surface of the slit, wherein the clamping piece in cross-section is substantially asymmetrical and V-shaped, wherein at least one of the clamping sides of the clamping piece is concave.

In case of a relatively narrow slit the clamping piece may with its concave side be placed against the pipe, in which case a small effective thickness of the clamping piece is utilised, and in case of a wide slit be placed with the concave side against the surface of the slit, in which case a large effective thickness of the clamping piece is utilised. The same clamping piece can be used in both cases, yet providing sufficient clamping action.

In a comparable manner the same clamping piece can be used in a slit of a certain size, for pipes of a different diameter. In case of a pipe having a smaller diameter, for instance 16 mm, the clamping piece is placed with its concave side towards the surface of the slit, and in case of a pipe having a larger diameter, for instance 19 mm, the clamping piece is placed with its concave side against the pipe.

In that way a clamping piece is provided that can be used either in slits of various widths for pipes with a certain diameter, or in slits having a certain width for pipes of various diameters.

In one embodiment the concave clamping side has a concavity exceeding or equalling the curvature of the pipe wall, so that the clamping piece is able to abut the pipe as closely as possible.

Preferably the concave clamping side is concave from the narrow end up to the broad end of the clamping piece, in which way it can be widely used.

In one embodiment the opposite clamping side is substantially straight.

In one embodiment the opposite clamping side is convex.

As is the case in known clamping pieces, the clamping piece may be provided with an accommodation space for inserting a placement tool.

If the clamping piece is formed like a solid body, preferably of synthetic material, the accommodation space may be formed like a hole.

Alternatively the clamping piece may comprise two legs, defining the respective clamping sides and being resiliently movable with respect to each other.

In that case the accommodation space can be formed by a step formed at one of the legs, at the side facing the other leg. Alternatively the accommodation space may be formed by a hole in one of the legs.

From a further aspect the invention provides a clamping piece for securing an installation pipe in a slit in a wall wherein the clamping piece is provided with two opposite clamping sides for engaging the installation pipe and a surface of the slit, respectively, wherein the clamping piece at one clamping side is concave and substantially straight or convex at the opposite side.

The clamping piece may in cross-section be asymmetrical and substantially V-shaped.

From a further aspect the invention provides a method for clamping an installation pipe in a slit in a wall, wherein a clamping piece according to the invention is inserted into the space between the pipe and a side wall surface of the slit, such that the clamping piece with one side engages into the side wall surface of the slit and with the opposite side presses the pipe against the opposite side wall surface of the slit.

It is noted that from German utility model 67.52491 a steel wire brace is known for keeping an installation pipe in a slit. The brace is provided with one or more sharp tips at both opposite ends, with which tips the brace is able to firmly engage into both opposite wall surfaces of the slit. The brace then extends over the pipe, over the full width of the slit.

The aspects and measures described and/or shown in the application may where possible also be used individually. Said individual aspects may be the subject of divisional patent applications relating thereto.

### SHORT DESCRIPTION OF THE DRAWINGS

The invention will be elucidated on the basis of a number of exemplary embodiments shown in the attached drawings, in which:
Figures 1A and 1B show a first embodiment of a clamping piece according to the invention, viewed from two sides;
Figure 2 illustrates a schematically shown wall section in which two slits having a different width have been made, including placed clamping piece according to figures 1A and 1B;
Figure 3 shows a view along the slits in the arrangement of figure 2;
Figures 4A and 4B show a second embodiment of a clamping piece according to the invention, viewed from two sides;
Figure 5 shows a view corresponding with figure 3, now with pipes of a different diameter;
Figures 6A and 6B show a third embodiment of a clamping piece according to the invention, viewed from two sides; and
Figure 7 shows a view corresponding with figure 5 with a clamping piece according to figures 6A and 6B, in this case with pipes of a different diameter.

### DETAILED DESCRIPTION OF THE DRAWINGS

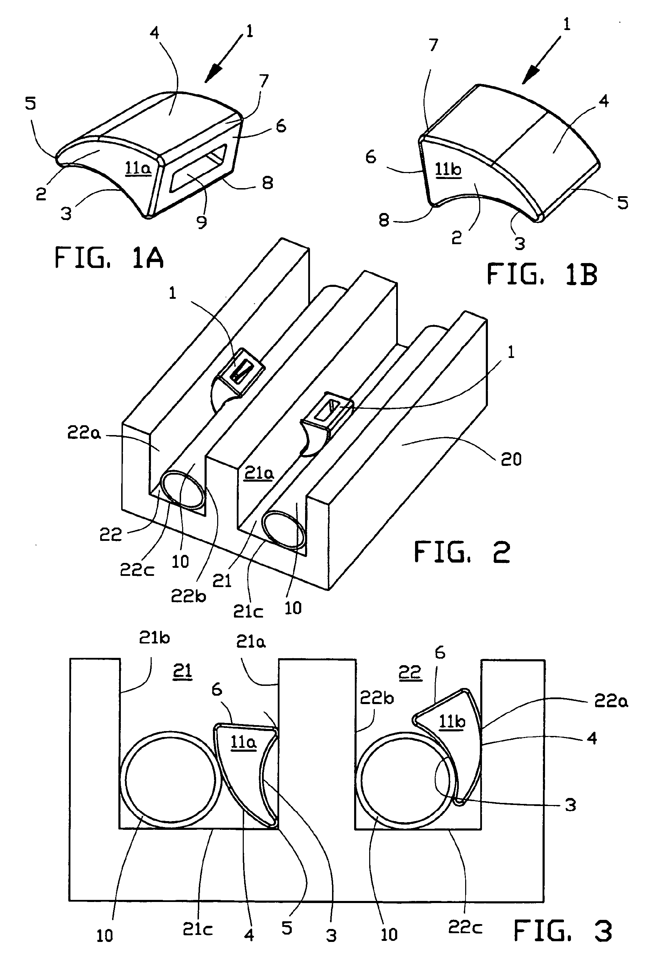

The clamping piece 1 shown in figures 1A and 1B is formed by a curved wedge-shaped (three-dimensional) body 2, made as one unity of synthetic material for instance a polypropylene.

The wedge-shaped body 2 has a concave clamping side 3 and an opposite, convex clamping side 4. The sides 3 and 4 taper towards each other to end in a rounded off tip 5, which may optionally also be sharp. At the end facing away from the tip 5, an upper surface 6 has been formed, in which a hole 9 can be reached, in which the flat end of a screwdriver fits. The surfaces 4 and 6 merge into each other at the location of an edge 7, and the surfaces 3 and 6 merge into each other at the location of an edge 8. The body 2 furthermore has two side surfaces 11 a, 11 b. The edges 7 and 8 may be sharp.

The radius of curvature of the concave surface of clamping side 3 is approximately 9.5 mm in this example, that means the radius of a pipe diameter of 19 mm.

In figure 2 a wall section 20 is shown in which two slits 21 and 22 have been made. The material of the wall section 20 may, as usual, be lime-sand stone, in which the slits 21 and 22 have been sawn. The slit 21 is wider than the slit 22. An installation pipe 10, for instance having a diameter of 16 mm, has been placed in both slits. The slits 21 and 22 have upright wall surfaces 21 a,b and 22a,b and bottom surfaces 21 c, 22c.

In case the pipe 10 has to be clamped in the wide slit 21, the clamping piece 1 is placed in the manner shown, that means with the convex clamping side 4 against the pipe 10, and with the concave side 3 facing the slit wall surface 21 a. The clamping piece 1 here presses against wall surface 21 a with edge 8 and tip 5, and optionally against the bottom surface 21 c with the tip 5, as a result of which the pipe remains clamped in its place between wall surface 21 b and bottom surface 21 c of the slit 21 and the convex surface 4.

In case the pipe 10 is placed in the narrower slit 22 the clamping piece 1 is used the other way round, as a result of which the convex clamping side 3 abuts the pipe 10, and the convex clamping side 4 abuts the slit wall surface 22a. The pipe is thus kept clamped between slit wall surface 22b, bottom surface 22c and the concave clamping side 3 of the clamping piece 1.

If a pipe having a diameter of 19 mm has to be clamped, things can be done in a comparable manner. In the slit 21 the tip 5 will remain above the bottom surface 21 c. In the slit 22 the concave clamping side 3 will then abut over a larger length against the pipe wall, considered in circumferential direction.

The clamping piece 1 can be forcefully placed using an end of a screwdriver inserted in hole 9, thus ensuring clamping.

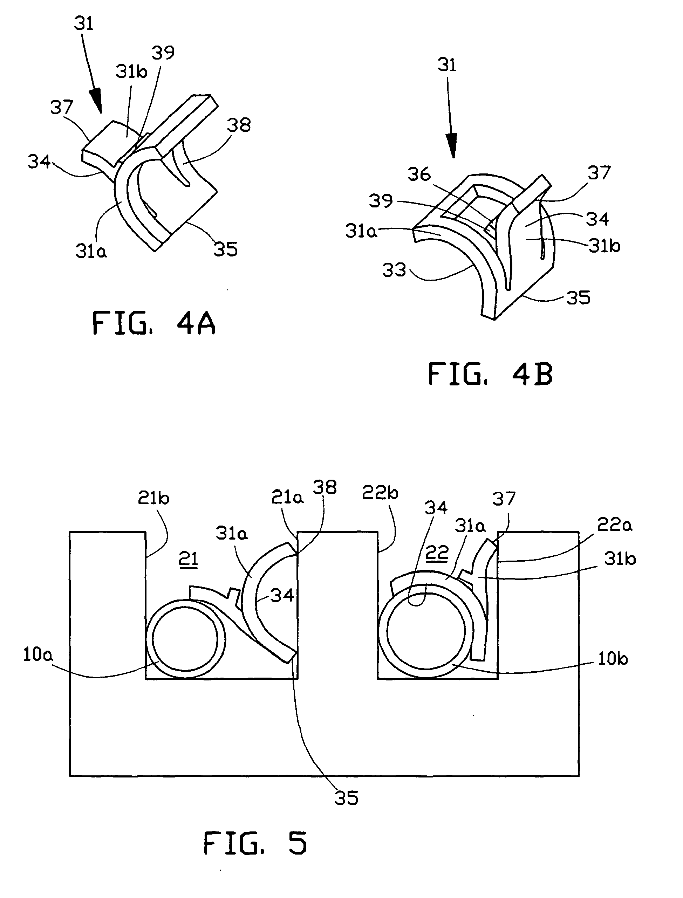

The clamping piece 31 shown in figures 4A and 4B has been formed as one unity of for instance synthetic material, such as polypropylene, and has two legs 31 a, 31 b which meet each other at the location of tip area 35. The leg 31 a is curved to form a concave surface 33 of which the curvature may correspond with the radius of a pipe having a diameter of 19 mm. The other leg 31 b is substantially straight, but at the free end slightly bend to the outside. The curvature of said short portion may correspond with a curvature of a pipe having a diameter of 16 mm.

The ends of the legs 31a, 31 b form edges 38 and 37, respectively. At the side facing the leg 31 a the leg 31 b is provided with a step 40, for forming an accommodation space 39 for a flat end of a screwdriver.

The legs 31 a, 31 b are resiliently connected to each other. The leg 31 a is open to enhance resiliency and for enhancing the manufacturability in a die.

When placing the clamping piece 31 in a relatively wide slit 21 and/or with a pipe 10a having a smaller diameter, for instance 16 mm, clamping piece 31 can be placed with leg 31 a at the side of the wall surface 21 a, so that leg 31 a engages into that surface with the edge 38 and with the tip 35. The other leg 31 b engages onto the pipe 10a, in order to press it against the slit surface 21 b and the bottom surface 21 c. The resilience of the legs 31 a, 31 b may increase the clamping force.

In case of a narrower slit 22 and a thicker pipe 10b, for instance 19 mm, the clamping piece 31 is arranged the other way round. The leg 31 a here abuts the circumference of the pipe 10b, more or less smoothly. The other leg 31 b presses against the wall surface 22a of the slit 22 with edge 37.

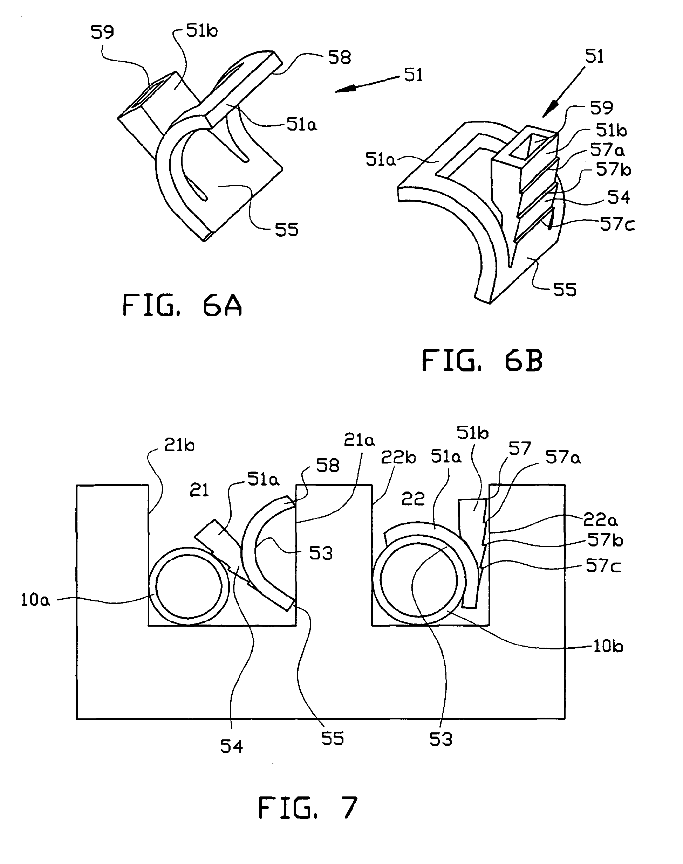

The embodiment of the clamping piece 51, shown in figures 6A and 6B, slightly corresponds with the one according to figures 4A and 4B. The clamping piece 51 formed as one unity thus has two resiliently connected legs 51 a and 51 b, wherein the concavely bent leg 51 a is open again. Different is that the -substantially straight- leg 51 b itself is provided at the top with a hole 59 for a flat head of a screwdriver. Furthermore the outer surface 53 of the leg 51 b is provided with a number of sharp steps 57a,b,c, below the edge 57. The curvature of the face 53 of leg 51a in this example corresponds with the curvature of a pipe of a larger diameter, for instance 19 mm.

When placing (see figure 7) in a wide slit 21 the leg 51a is placed against the wall surface 21 a again, in order to engage therein with the edges 58 and 55. The outer surface 54 of leg 51 b engages onto the pipe 10a, in particular with the steps 57a, 57b and/or 57c.

In case of the narrower slit 22 the clamping piece 51 is used the other way round again, wherein the steps 57a,b,c are able to engage into the wall surface 22a.

In all arrangements shown the used clamping piece 1, 31, 51 engages onto the slit wall(s) at several locations, in particular according to a substantially line-shaped contact, considered in slit/pipe direction.

## Claims

1. Clamping piece (1, 31, 51) for securing an installation pipe (10) in a slit (21, 22) in a wall (20) wherein the clamping piece is provided with two opposite clamping sides (3, 4) for engaging the installation pipe and a side wall surface (21a, 21b, 22a, 22b) of the slit, respectively, in order to clamp the pipe (10) against an opposite side wall surface (21a, 21b, 22a, 22b) of the slit, wherein the clamping piece in cross-section is asymmetrical and substantially V-shaped, wherein at least one of the clamping sides (3, 4) of the clamping piece is concave.

2. Clamping piece (1, 31, 51) according to claim 1, wherein the concave clamping side (3) has, a concavity exceeding or equalling the curvature of the pipe wall.

3. Clamping piece (1, 31, 51) according to claim 1 or 2, wherein the concave clamping side (3) is concave from the narrow end up to the broad end of the clamping piece.

4. Clamping piece (1, 31, 51) according to claim 1, 2 or 3, wherein the opposite clamping side is substantially straight.

5. Clamping piece (1, 31, 51) according to claims 1, 2 or 3, wherein the opposite clamping side is convex.

6. Clamping piece (1, 31, 51) according to any one of the preceding claims, provided with an accommodation space (9, 39, 59) or inserting a placement tool.

7. Clamping piece (1, 31, 51) according to any one of the preceding claims, wherein the clamping piece is formed like a solid body (2), preferably made of synthetic material.

8. Clamping piece (1, 31, 51) according to claims 6 and 7, wherein the accommodation space (9, 39, 59) is formed like a hole.

9. Clamping piece (1, 31, 51) according to any one of the claims 1-6, wherein the clamping piece comprises two legs, defining the respective clamping sides and being resiliently movable with respect to each other.

10. Clamping piece (1, 31, 51) according to claims 6 and 9, wherein the accommodation space is formed by a step formed at one of the legs, at the side facing the other leg.

11. Clamping piece (1, 31, 51) according to claims 6 and 9, wherein the accommodation space is formed by a hole in one of the legs.

12. Clamping piece (1, 31, 51) for securing an installation pipe (10) in a slit (21, 22) in a wall (20) wherein the clamping piece is provided with two opposite clamping sides (3, 4) for engaging the installation pipe and a surface (21a, 21b, 22a, 22b) of the slit, respectively, wherein the clamping piece at one clamping side (3) is concave and substantially straight or convex at the opposite side (4).

13. Clamping piece (1, 31, 51) according to claim 12, wherein the clamping piece in cross-section is asymmetrical and substantially V-shaped.

14. Method for clamping an installation pipe (10) in a slit (21, 22) in a wall by means of a clamping piece (1, 31, 51), wherein the clamping piece is provided with two opposite clamping sides (3, 4) for engaging the installation pipe and a side wall surface (21a, 21b, 22a, 22b) of the slit, respectively, in order to clamp the pipe (10) against an opposite side wall surface (21a, 21b, 22a, 22b) of the slit, wherein the clamping piece in cross-section is asymmetrical and substantially V-shaped, wherein at least one of the clamping sides (3, 4) of the clamping piece is concave, wherein the clamping piece (1, 31, 51) is inserted into the space between the pipe and a side wall surface (21a, 21b, 22a, 22b) of the slit, such that the clamping piece with one side engages into the side wall surface of the slit and with the opposite side presses the pipe against the opposite side wall surface of the slit.

## Patentansprüche

1. Klemmteil (1, 31, 51) zum Fixieren eines Installationsrohrs (10) in einem Schlitz (21, 22) in einer Wand (20), wobei das Klemmteil mit zwei gegenüberliegenden Klemmseiten (3, 4) zum Eingriff mit dem Installationsrohr bzw. einer Seitenwandfläche (21a, 21b, 22a, 22b) des Schlitzes versehen ist, um das Rohr (10) gegen eine gegenüberliegende Seitenwandfläche (21a, 21b, 22a, 22b) des Schlitzes zu klemmen, wobei das Klemmteil im Querschnitt asymmetrisch und im Wesentlichen V-förmig ist, wobei wenigstens eine der Klemmseiten (3, 4) des Klemmteils konkav ist.

2. Klemmteil (1, 31, 51) nach Anspruch 1, bei dem die konkave Klemmseite (3) eine Konkavität aufweist, die die Krümmung der Rohrwand übersteigt oder ihr gleichkommt.

3. Klemmteil (1, 31, 51) nach Anspruch 1 oder 2, bei dem die konkave Klemmseite (3) vom schmalen Ende bis zum breiten Ende des Klemmteils konkav ist.

4. Klemmteil (1, 31, 51) nach Anspruch 1, 2 oder 3, bei dem die gegenüberliegende Klemmseite im Wesentlichen gerade ist.

5. Klemmteil (1, 31, 51) nach Anspruch 1, 2 oder 3, bei dem die gegenüberliegende Klemmseite konvex ist.

6. Klemmteil (1, 31, 51) nach einem der vorherigen Ansprüche, das mit einem Aufnahmeraum (9, 39, 59) zum Einsetzen eines Anbringungswerkzeugs versehen ist.

7. Klemmteil (1, 31, 51) nach einem der vorherigen Ansprüche, wobei das Klemmteil wie ein massiver Körper (2) geformt ist, der vorzugsweise aus synthetischem Material gefertigt ist.

8. Klemmteil (1, 31, 51) nach den Ansprüchen 6 und 7, bei dem der Aufnahmeraum (9, 39, 59) wie ein Loch geformt ist.

9. Klemmteil (1, 31, 51) nach einem der Ansprüche 1 bis 6, wobei das Klemmstück zwei Schenkel aufweist, die die jeweiligen Klemmseiten definieren und in Bezug aufeinander beweglich sind.

10. Klemmteil (1, 31, 51) nach den Ansprüchen 6 und 9, bei dem der Aufnahmeraum durch eine auf einem der Schenkel ausgebildeten Stufe auf der zum anderen Schenkel weisenden Seite gebildet wird.

11. Klemmteil (1, 31, 51) nach den Ansprüchen 6 und 9, bei dem der Aufnahmeraum durch ein Loch in einem der Schenkel gebildet wird.

12. Klemmteil (1, 31, 51) zum Fixieren eines Installationsrohrs (10) in einem Schlitz (21, 22) in einer Wand (20), wobei das Klemmteil mit zwei gegenüberliegenden Klemmseiten (3, 4) zum Eingriff mit dem Installationsrohr bzw. einer Fläche (21 a, 21b, 22a, 22b) des Schlitzes versehen ist, wobei das Klemmteil auf einer Klemmseite (3) konkav und auf der gegenüberliegenden Seite (4) im Wesentlichen gerade oder konvex ist.

13. Klemmteil (1, 31, 51) nach Anspruch 12, wobei das Klemmteil im Querschnitt asymmetrisch und im Wesentlichen V-förmig ist.

14. Verfahren zum Einklemmen eines Installationsrohrs (10) in einem Schlitz (21, 22) in einer Wand mittels eines Klemmteil (1, 31, 51), wobei das Klemmteil mit zwei gegenüberliegenden Klemmseiten (3, 4) zum Eingriff mit dem Installationsrohr bzw. einer Seitenwandfläche (21 a, 21 b, 22a, 22b) des Schlitzes versehen ist, um das Rohr (10) gegen eine gegenüberliegende Seitenwandfläche (21a, 21b, 22a, 22b) des Schlitzes zu klemmen, wobei das Klemmteil im Querschnitt asymmetrisch und im Wesentlichen V-förmig ist, wobei wenigstens eine der Klemmseiten (3, 4) des Klemmteils konkav ist, bei dem das Klemmteil (1, 31, 51) in den Zwischenraum zwischen dem Rohr und einer Seitenwandfläche (21 a, 21 b, 22a, 22b) des Schlitzes derart eingesetzt wird, dass das Klemmteil mit einer Seite in die Seitenwandfläche des Schlitzes eingreift und mit der gegenüberliegenden Seite das Rohr gegen die gegenüberliegende Seitenwandfläche des Schlitzes drückt.

## Revendications

1. Pièce de serrage (1, 31, 51) pour fixer un tuyau d'installation (10) dans une fente (21, 22) dans une paroi (20), dans laquelle la pièce de serrage est prévue avec deux côtés de serrage opposés (3, 4) pour mettre en prise le tuyau d'installation et une surface de paroi latérale (21a, 21b, 22a, 22b) de la fente respectivement, afin de serrer le tuyau (10) contre une surface de paroi latérale opposée (21a, 21b, 22a, 22b) de la fente, dans laquelle la pièce de serrage en section transversale est asymétrique et sensiblement en forme de V, dans laquelle au moins l'un des côtés de serrage (3, 4) de la pièce de serrage est concave.

2. Pièce de serrage (1, 31, 51) selon la revendication 1, dans laquelle le côté de serrage concave (3) a une concavité dépassant ou égalant la courbure de la paroi de tuyau.

3. Pièce de serrage (1, 31, 51) selon la revendication 1 ou 2, dans laquelle le côté de serrage concave (3) est concave à partir de l'extrémité étroite jusqu'à l'extrémité large de la pièce de serrage.

4. Pièce de serrage (1, 31, 51) selon la revendication 1, 2 ou 3, dans laquelle le côté de serrage opposé est sensiblement droit.

5. Pièce de serrage (1, 31, 51) selon la revendication 1, 2 ou 3, dans laquelle le côté de serrage opposé est convexe.

6. Pièce de serrage (1, 31, 51) selon l'une quelconque des revendications précédentes, prévue avec un espace de réception (9, 39, 59) pour insérer un outil de mise en place.

7. Pièce de serrage (1, 31, 51) selon l'une quelconque des revendications précédentes, dans laquelle la pièce de serrage est formée comme un corps plein (2) de préférence réalisée à partir d'un matériau synthétique.

8. Pièce de serrage (1, 31, 51) selon les revendications 6 et 7, dans laquelle l'espace de réception (9, 39, 59) est formé comme un trou.

9. Pièce de serrage (1, 31, 51) selon l'une quelconque des revendications 1 à 6, dans laquelle la pièce de serrage comprend deux pattes, définissant les côtés de serrage respectifs et étant mobiles élastiquement l'une par rapport à l'autre.

10. Pièce de serrage (1, 31, 51) selon les revendications 6 et 9, dans laquelle l'espace de réception est formé par un échelon formé au niveau de l'une des pattes, au niveau du côté faisant face à l'autre patte.

11. Pièce de serrage (1, 31, 51) selon les revendications 6 et 9, dans laquelle l'espace de réception est formé par un trou dans l'une des pattes.

12. Pièce de serrage (1, 31, 51) pour fixer un tuyau d'installation (10) dans une fente (21, 22) dans une paroi (20), dans laquelle la pièce de serrage est prévue avec deux côtés de serrage opposés (3, 4) pour mettre en prise le tuyau d'installation et une surface (21a, 21b, 22a, 22b) de la fente respectivement, dans laquelle la pièce de serrage au niveau d'un côté de serrage (3) est concave et sensiblement droite ou convexe au niveau du côté opposé (4).

13. Pièce de serrage (1, 31, 51) selon la revendication 12, dans laquelle la pièce de serrage en section transversale est asymétrique et sensiblement en forme de V.

14. Procédé pour serrer un tuyau d'installation (10) dans une fente (21, 22) dans une paroi au moyen d'une pièce de serrage (1, 31, 51), dans lequel la pièce de serrage est prévue avec deux côtés de serrage opposés (3, 4) pour mettre en prise le tuyau d'installation et une surface de paroi latérale (21a, 21b, 22a, 22b) de la fente respectivement, afin de serrer le tuyau (10) contre une surface de paroi latérale opposée (21a, 21b, 22a, 22b) de la fente, dans lequel la pièce de serrage en section transversale est asymétrique et sensiblement en forme de V, dans laquelle au moins l'un des côtés de serrage (3, 4) de la pièce de serrage est concave, dans lequel la pièce de serrage (1, 31, 51) est insérée dans l'espace situé entre le tuyau et une surface de paroi latérale (21a, 21b, 22a, 22b) de la fente, de sorte que la pièce de serrage avec un côté se met en prise dans la surface de paroi latérale de la fente et avec le côté opposé, comprime le tuyau contre la surface de paroi latérale opposée de la fente.
